# FASCICULE DE BREVET EUROPEEN

(11) **EP 0 955 813 B1**
(45) Date de publication et mention de la délivrance du brevet: **24.07.2002**
(21) Numéro de dépôt: 96901865.4
(22) Date de dépôt: 26.01.1996
(51) Int. Cl.: A22C 29/04

(54) **PROCEDE POUR LA PREPARATION A L'OUVERTURE DES BIVALVES, NOTAMMENT DES HUITRES, ET DISPOSITIF POUR SA MISE EN UVRE**
VERFAHREN UND VORRICHTUNG ZUR VORBEREITUNG ZUM ÖFFNEN VON ZWEISCHALIGEN SEETIEREN, INSBESONDERE VON MUSCHELN
PROCESS AND DEVICE FOR PREPARING BIVALVES, IN PARTICULAR OYSTERS, FOR OPENING

(30) Priorité: 27.01.1995 FR 9501191
(43) Date de publication de la demande: 17.11.1999
(73) Titulaire: Renaut, Yves, 35510 Cesson-Sévigné (FR); Delvigne, Michel, 85300 Challans (FR)
(72) Inventeur: Renaut, Yves, 35510 Cesson-Sévigné (FR); Delvigne, Michel, 85300 Challans (FR)
(74) Mandataire: Dawidowicz, Armand
(86) Numéro de dépôt international: FR9600140
(87) Numéro de publication internationale: WO9622694

(56) Documents cités:
- FR-A- 2 551 630
- FR-A- 2 622 400
- US-A- 4 420 492
- PATENT ABSTRACTS OF JAPAN vol. 14 no. 74 (C-0687) ,13 Février 1990 & JP,A,01 291744 (RYOJI SASAKI) 24 Novembre 1989,

## Description

La présente invention a pour objet un procédé de préparation à l'ouverture des bivalves, notamment des huîtres, et le dispositif permettant sa mise en oeuvre.

L'ouverture des huîtres et autres bivalves est réalisée traditionnellement au moyen d'un couteau à coquillages qui peut être électrique ou non.

En pratique, le couteau est introduit en force entre les deux valves afin d'entrouvrir le coquillage et de sectionner le muscle adducteur, ce qui nécessite savoir-faire et force physique, et est parfois la cause d'accidents, en sorte que la difficulté d'ouverture des huîtres et autres bivalves constitue un obstacle important à l'accroissement de la consommation de ceux-ci.

On a également proposé (JP-A-1.291.744) de sectionner le muscle adducteur au moyen d'un outil coupant et de serrer les deux coquilles par des moyens appropriés pour que l'huître reste fermée. Ce procédé connu présente le même inconvénient que le précédent.

La présente invention a pour but de remédier à cet inconvénient en proposant un procédé de préparation à l'ouverture d'huîtres et autres bivalves, permettant une ouverture facile et sans risque, ne nécessitant aucune aptitude particulière.

Le procédé objet de la présente invention consiste à faire s'entrouvrir le bivalve en cours de culture, puis à réaliser un cerclage du muscle adducteur au moyen d'une bague ou analogue, prolongée par un moyen de préhension qui demeure à l'extérieur du bivalve, afin de permettre ultérieurement, alors que le bivalve est fermé, de sectionner le muscle adducteur en tirant sur ledit moyen de préhension.

Conformément à l'invention, l'ouverture du bivalve pour permettre le cerclage du muscle adducteur est obtenue en faisant tremper le bivalve dans une solution d'environ 40% d'eau douce et 60% d'eau de mer, additionnée d'environ 5% en poids de chlorure de magnésium.

En pratique, les bivalves sont plongés, après lavage et calibrage, dans une telle solution, le temps de trempage étant préférentiellement de l'ordre de 6 heures.

Le chlorure de magnésium provoque un relâchement du muscle adducteur qui permet d'entrouvrir les valves afin de réaliser le cerclage.

Le cerclage du muscle adducteur peut être réalisé hors de la solution, après trempage, ou préférentiellement, dans celle-ci.

Après l'opération de cerclage, les bivalves sont plongés dans de l'eau de mer afin d'éliminer naturellement le chlorure de magnésium, ce qui est obtenu rapidement.

Le dispositif permettant la mise en oeuvre du procédé selon l'invention comporte, selon un premier mode de réalisation, un fil métallique conformé en une boucle à laquelle est solidarisé un moyen de préhension destiné à être introduit dans ladite boucle après que l'on ait fait passer celle-ci autour du muscle adducteur du bivalve, le fil passant doublement autour du muscle adducteur tandis que le moyen de préhension demeure à l'extérieur du bivalve.

Pour ouvrir le bivalve au moment de sa consommation, il suffit de tirer sur le moyen de préhension, ce qui a pour effet de resserrer le cerclage autour du muscle adducteur et de sectionner ce dernier.

Selon un second mode de réalisation le dispositif permettant la mise en oeuvre du procédé selon l'invention comporte une lame plate en arc de cercle dont le bord concave est tranchant, et dont les extrémités sont introduites chacune, avec possibilité de solidarisation, dans l'une des extrémités d'une gaine rigide en forme de segment de tore, afin de former une bague destinée à être placée autour du muscle adducteur en escamotant ladite lame dans ladite gaine, ledit bord tranchant étant recouvert d'une enveloppe amovible reliée à un fil passant dans ladite gaine et sortant par un orifice pratique dans celle-ci dans sa région diamétralement opposée à la lame, une traction sur ledit fil permettant l'enlèvement de ladite enveloppe en vue du sectionnement dudit muscle adducteur par la lame.

Les avantages et les caractéristiques de la présente invention ressortiront plus clairement de la description qui suit et qui se rapporte au dessin annexé, lequel en représente deux modes de réalisation non limitatifs.

Dans le dessin annexé :
- la figure 1 représente une vue en plan d'un premier mode de réalisation du dispositif selon l'invention.
- la figure 2 représente une vue partielle en perspective du même dispositif mis en place.
- la figure 3 représente une vue en plan d'un second mode de réalisation du dispositif selon l'invention.

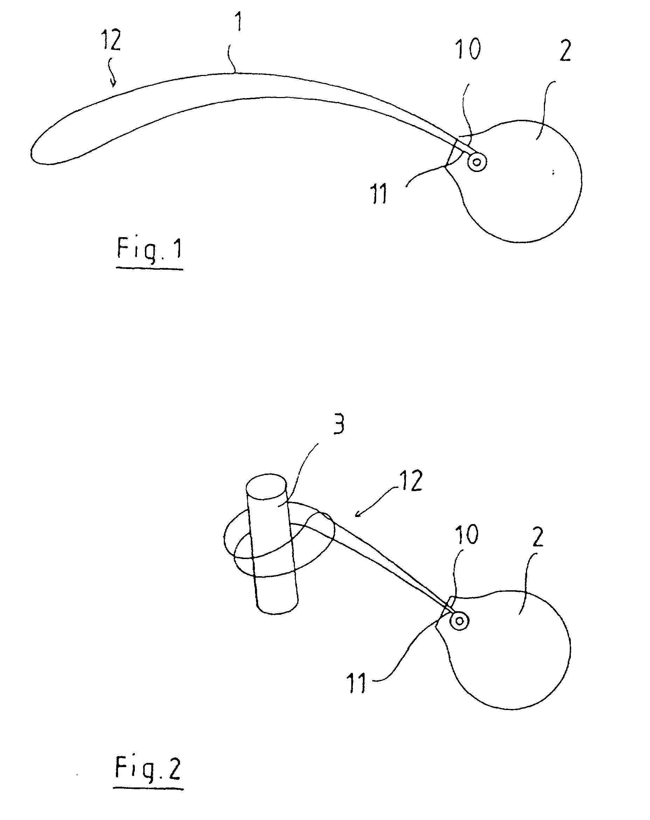

Si on se réfère à la figure 1 on peut voir que dans un premier mode de réalisation, le dispositif selon l'invention comporte un fil 1 dont les extrémités 10 et 11 sont serties sur un moyen de préhension 2 afin de former une boucle 12.

Le fil 1 est réalisé de préférence en acier inoxydable et est de faible section, et le moyen de préhension 2 est une plaquette réalisée en matière plastique du type polychlorure de vinyle.

Si on se réfère maintenant à la figure 2 on peut voir le muscle adducteur 3 d'un bivalve cerclé, ce qui est obtenu en faisant passer la boucle 12 entre la charnière, non représentée, et le muscle adducteur 3 et en faisant passer le moyen de préhension 2 dans la boucle 12.

Il est à noter que selon une variante, non représentée, le dispositif selon l'invention peut être formé d'un fil dont les deux extrémités sont aptes à être solidarisées l'une à l'autre après que l'une d'elles ait été passée autour du muscle adducteur.

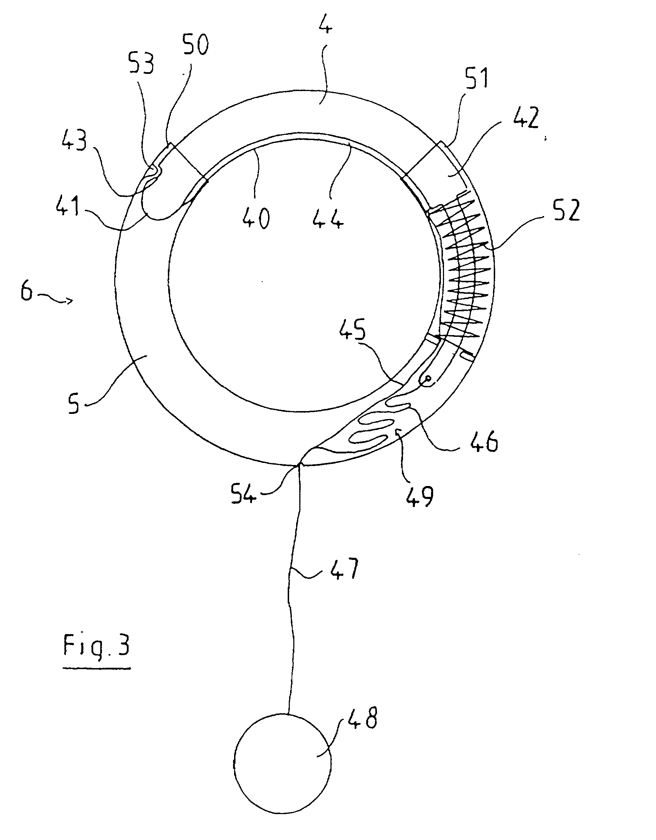

Si on se réfère maintenant à la figure 3 on peut voir que dans un second mode de réalisation, le dispositif selon l'invention comporte une lame plate 4 en arc de cercle dont le bord concave 40 est tranchant, et dont les extrémités 41 et 42 sont introduites chacune dans les extrémités, respectivement 50 et 51, d'une gaine rigide courbe 5.

La gaine 5 et la lame 4 forment une bague 6 destinée à entourer le muscle adducteur, sa pose étant réalisée en escamotant la lame 4 dans la gaine 5.

La rentrée de la lame 4 dans la gaine 5 est réalisée manuellement en comprimant un ressort 52 contenu dans la gaine 5 et sur lequel prend appui l'extrémité 42 de la lame 4.

La fermeture de la bague 6 est sécurisée par une encoche 43 pratiquée dans l'extrémité 41 de la lame 4 et dans laquelle s'encliquette un plot 53 que comporte intérieurement l'extrémité 50 de la gaine 5.

Le bord tranchant 40 de la lame 4 est recouvert d'une enveloppe 44 reliée à un fil 45, tandis que la lame 4 est reliée à un fil 46, le fil 45 et le fil 46 étant solidaires, par leurs extrémités libres, d'un fil 47 qui passe dans la gaine 5 et qui en sort par un orifice 54 pratiqué dans celle-ci dans sa région diamétralement opposée à la lame 4, l'extrémité libre du fil 47 comportant un moyen de préhension 48.

Une traction sur le fil 47, en saisissant le moyen de préhension 48 qui demeure à l'extérieur du bivalve, a pour premier effet l'enlèvement de l'enveloppe 44, et comme second effet l'entraînement de la bague 6, avec pour conséquence le sectionnement du muscle adducteur par le bord tranchant 40.

Il est à noter que le fil 46 comporte, intérieurement à la gaine 5, une longueur tampon 49, permettant d'éviter que l'entraînement de la bague 6 n'ait lieu avant l'enlèvement de l'enveloppe 44.

## Revendications

1. Procédé de préparation à l'ouverture des bivalves, notamment des huîtres, **caractérisé en ce qu'**il consiste à faire s'entrouvrir le bivalve en cours de culture, puis à réaliser un cerclage du muscle adducteur au moyen d'une bague ou analogue (1, 4), prolongée par un moyen de préhension (2, 48) qui demeure à l'extérieur du bivalve, afin de permettre ultérieurement, alors que le bivalve est fermé, de sectionner le muscle adducteur (3) en tirant sur ledit moyen de préhension (2, 48).

2. Procédé selon la revendication 1,
**caractérisé en ce que** l'ouverture du bivalve pour permettre le cerclage du muscle adducteur, est obtenue en faisant tremper le bivalve dans une solution d'environ 40% d'eau douce et 60% d'eau de mer, additionnée d'environ 5% en poids de chlorure de magnésium.

3. Procédé selon la revendication 2,
**caractérisé en ce que** la durée de l'opération de trempage est de l'ordre de 6 heures.

4. Procédé selon la revendication 2 ou la revendication 3,
**caractérisé en ce que** le cerclage est réalisé en dehors de la solution de trempage.

5. Procédé selon la revendication 2 ou la revendication 3,
**caractérisé en ce que** le cerclage est réalisé dans la solution de trempage.

6. Procédé selon l'une quelconque des revendications 2 à 5,
**caractérisé en ce que** le cerclage est suivi d'une opération d'immersion prolongée dans de l'eau de mer.

7. Dispositif pour la mise en oeuvre du procédé selon l'une quelconque des revendications 1 à 6
**caractérisé en ce qu'**il comporte un fil (1) conforme en une boucle (12) à laquelle est solidarisé un moyen de préhension (2) destiné à être introduit dans ladite boucle (12) après que l'on ait fait passer celle-ci autour du muscle adducteur (3) du bivalve.

8. Dispositif pour la mise en oeuvre du procédé selon l'une quelconque des revendications 1 à 6,
**caractérisé en ce qu'**il est formé d'un fil destiné à être introduit entre la charnière et le muscle adducteur du bivalve et un moyen de préhension agencé pour solidariser ensuite les deux extrémités dudit fil l'une à l'autre à l'extérieur du bivalve.

9. Dispositif selon la revendication 7 ou la revendication 8,
**caractérisé en ce que** le fil est en acier inoxydable.

10. Dispositif pour la mise en oeuvre du procédé selon l'une quelconque des revendications 1 à 6,
**caractérisé en ce qu'**il comporte une lame plate (4) en arc de cercle dont le bord concave (40) est tranchant, et dont les extrémités (41, 42) sont introduites chacune, avec possibilité de solidarisation, dans l'une des extrémités (50, 51) d'une gaine rigide (5) en forme de segment de tore, afin de former une bague (6) destinée à être placée autour du muscle adducteur en escamotant ladite lame (4) dans ladite gaine (5), ledit bord tranchant (40) étant recouvert d'une enveloppe amovible (44) reliée à un fil (4è) passant dans ladite gaine (5) et sortant par un orifice (54) pratiqué dans celle-ci dans sa région diamétralement opposée à la lame (4), une traction sur ledit fil (47) permettant l'enlèvement de ladite enveloppe (44) en vue du sectionnement dudit muscle adducteur.

## Patentansprüche

1. Verfahren zur Vorbereitung zum Öffnen von zweischaligen
Muscheln, insbesondere von Austern, **dadurch gekennzeichnet, daß** es darin besteht, die Muschel im Verlauf der Aufzucht teilweise zu öffnen, um anschließend eine Umschnürung des Schließmuskels mittels eines Rings oder eines ähnlichen Elements (1, 4) auszuführen, der bzw. das durch ein Greifmittel (2, 48) verlängert wird, das außerhalb der Muschel verbleibt, um es später, wenn die Muschel geschlossen ist, zu ermöglichen, den Schließmuskel (3) durch Ziehen an dem besagten Greifmittel (2, 48) zu durchtrennen.

2. Verfahren nach Anspruch 1,
**durch gekennzeichnet**, daß das Öffnen der Muschel, um die Umschnürung des Schließmuskels zu ermöglichen, dadurch erfolgt, daß die Muschel in einer Lösung von etwa 40% Süßwasser und 60% Meerwasser unter Zusatz von etwa 5 Gewichts-% Magnesiumchlorid eingelegt wird.

3. Verfahren nach Anspruch 2,
**durch gekennzeichnet**, daß sich die Dauer des Einlegvorgangs in einer Größenordnung von 6 Stunden bewegt.

4. Verfahren nach Anspruch 2 oder Anspruch 3,
**durch gekennzeichnet**, daß die Umschnürung außerhalb der Einleglösung erfolgt.

5. Verfahren nach Anspruch 2 oder Anspruch 3,
**durch gekennzeichnet**, daß die Umschnürung in der Einleglösung erfolgt.

6. Verfahren nach einem der Ansprüche 2 bis 5,
**durch gekennzeichnet**, daß im Anschluß an die Umschnürung ein längerer Eintauchvorgang in Meerwasser erfolgt.

7. Vorrichtung zur Anwendung des Verfahrens nach einem der Ansprüche 1 bis 6,
**durch gekennzeichnet**, daß sie einen Draht (1) umfaßt, der zu einer Schlaufe (12) geformt ist, mit der ein Greifmittel (2) fest verbunden ist, das dazu bestimmt ist, in die besagte Schlaufe (12) eingeführt zu werden, nachdem diese um den Schließmuskel (3) der Muschel herum angelegt worden ist.

8. Vorrichtung zur Anwendung des Verfahrens nach einem der Ansprüche 1 bis 6,
**durch gekennzeichnet**, daß sie aus einem Draht, der dazu bestimmt ist, zwischen das Schloßband und den Schließmuskel der Muschel eingeführt zu werden, und aus einem Greifmittel besteht, das so angeordnet ist, daß es anschließend die beiden Enden des besagten Drahts außerhalb der Muschel fest miteinander verbindet.

9. Vorrichtung nach Anspruch 7 oder Anspruch 8,
**durch gekennzeichnet**, daß der Draht aus nichtrostendem Stahl besteht.

10. Vorrichtung zur Anwendung des Verfahrens nach einem der Ansprüche 1 bis 6,
**durch gekennzeichnet**, daß sie eine kreisbogenförmige flache Leiste (4) umfaßt, deren konkave Kante (40) eine Schneidkante ist und deren Enden (41, 42) jeweils mit der Möglichkeit einer festen Verbindung in eines der Enden (50, 51) einer starren Hülle (5) in Form eines Torussegments eingeführt werden, um einen Ring (6) zu bilden, der dazu bestimmt ist, um den Schließmuskel herum angelegt zu werden, wobei die besagte Leiste (4) in die besagte Hülle (5) eingezogen wird, wobei die besagte Schneidkante (40) mit einer abnehmbaren Ummantelung (44) überzogen ist, die mit einem Draht (47) verbunden ist, der in die besagte Hülle (5) hineingeht und durch eine Öffnung (54) austritt, die in diese Hülle in ihrem der Leiste (4) diametral gegenüberliegenden Bereich eingearbeitet ist, wobei ein Zug an dem besagten Draht (47) die Entfernung der besagten Ummantelung (44) im Hinblick auf die Durchtrennung des besagten Schließmuskels ermöglicht.

## Claims

1. A method for preparing bivalves, in particular oysters, for opening, **characterised in that** it consists in causing the bivalve to half open during culturing, then binding the adductor muscle using a ring or the like (1, 4), extended by gripping means (2, 48) which remain on the outside of the bivalve, in order to make it possible subsequently, when the bivalve is closed, to sever the adductor muscle (3) by pulling on the said gripping means (2, 48).

2. A method according to Claim 1,
**characterised in that** opening of the bivalve to enable binding of the adductor muscle is achieved by soaking the bivalve in a solution of approximately 40% fresh water and 60% seawater, to which approximately 5% by weight magnesium chloride has been added.

3. A method according to Claim 2,
**characterised in that** the duration of the soaking operation is of the order of 6 hours.

4. A method according to Claim 2 or Claim 3,
**characterised in that** binding is performed outside the soaking solution.

5. A method according to Claim 2 or Claim 3,
**characterised in that** binding is performed in the soaking solution.

6. A method according to any one of Claims 2 to 5,
**characterised in that** binding is followed by a prolonged immersion operation in seawater.

7. A device for carrying out the method according to any one of Claims 1 to 6,
**characterised in that** it comprises a wire (1) in the shape of a loop (12) to which gripping means (2) are joined, which gripping means (2) are intended to be introduced into said loop (12) after the latter has been passed around the adductor muscle (3) of the bivalve.

8. A device for carrying out the method according to any one of Claims 1 to 6,
**characterised in that** it is made up of a wire intended to be introduced between the hinge and the adductor muscle of the bivalve and gripping means equipped to then join together the two ends of the said wire to one another outside the bivalve.

9. A device according to Claim 7 or Claim 8,
**characterised in that** the wire is made of stainless steel.

10. A device for carrying out the method according to any one of Claims 1 to 6,
**characterised in that** it comprises a flat blade (4) in the shape of an arc of a circle, the concave edge (40) of which is a cutting edge and the ends (41, 42) of which are each introduced, with the possibility of joining, into one of the ends (50, 51) of a rigid sheath (5) in the shape of a segment of a torus in order to form a ring (6) intended to be placed around the adductor muscle while concealing the said blade (4) in the said sheath (5), the said cutting edge (40) being covered by a fixed cover (44) connected to a wire (4è) (sic) passing into the said sheath (5) and exiting through an orifice (54) made in the latter **in that** region thereof that is diametrically opposed to the blade (4), a pull on the said wire (47) enabling the said cover (44) to be removed with a view to severing the said adductor muscle.
